# DEMANDE DE BREVET EUROPEEN

(11) **EP 0 524 125 A1**
(43) Date de publication de la demande: **20.01.1993**
(21) Numéro de dépôt: 92500051.5
(22) Date de dépôt: 04.05.1992
(51) Int. Cl.: F16L 25/00

(54) **Perfectionnements des tubes d'union dilatation de tuyauteries**

(71) Demandeur: Lopez Adan, Diego, E-28979 Madrid (ES)
(72) Inventeur: Lopez Adan, Diego, E-28979 Madrid (ES)
(74) Mandataire: Retuerta Carabella, Jaime Jesus (ES)

(57) **Abrégé**

PERFECTIONNEMENTS DES TUBES D'UNION-DILATATION DE TUYAUTERIES destinées à la conduite de fluides constitués par un élément tubulaire (2(1)) avec un diamètre normalisé, légèrement supérieur à la superficie externe des tuyaux à unir et une dimension proportionnelle de la longueur avec le calibre de l'union à effectuer; cet élément présente à ses extrémités (3(1)) un rebord de forme adéquate pour, en collaboration avec une bride conformée en couronne circulaire qui s'assemble à chaque extrémité, permettre l'installation d'un joint élastique déterminant pour l'étanchéité et dilatation de l'union. La bride (2(2)) à l'intérieur de sa couronne circulaire présente pour le moins quatre orifices qui permettent le passage de vis qui, en collaboration avec des écrous conventionnels, déterminent la fermeture étanche du tube à l'intétieur duquel se logent les extrémités des tuyaux à unir.

## Description

Exceptés dans les pays dits du Tiers Monde et dans certaines zones moins développées des pays qui possèdent un haut niveau de confort, rares sont les domiciles qui ne reçoivent pas une distribution de fluides, laquelle s'effectue depuis de nombreuses années à travers des tuyauteries, une fois dépassé le stade des procédés et systèmes archaïques qui sont dans l'esprit de tous et dont il reste queques témoignages qui constituent de nos jours des monuments et qui dans certains cas représentent une attraction touristique.

Les tuyauteries utilisées en ce but ont évolué à travers le temps, en accord avec l'évolution technique qui a fourni des matériaux de plus en plus parfaits pour que la conduite des fluides aboutisse à deux caractéristiques essentielles: la sécurité à la fois qu'un coût réduit.

Des matériaux de simple argile ont été utilisés, avec les désavantages bien connus dans l'actualité, pour leur fragilité, leur difficulté d'union, spécialement dans les cas où il faut précisément couder les tuyauteries; leur porosité détermine également une insécurité car l'emploi de celles-ci ne garantit pas l'herméticité, des filtrations se produisant avec les préjudices et autres dangers que cela entraîne pour le terrain sous lequel elles s'écoulent.

Les conduites métalliques, plus sûres, supposent néanmoins un coût très élevé, et présentent à la fois un inconvénient de manipulation pendant le transport el l'installation.

Les matériaux en fibrociment ont déterminé une amélioration notable en la matière sans pour cela ne pas tenir compte de la possibilité d'une rupture, à la fois qu'il existe des difficultés de raccordement pour ces derniers, problème que est à l'étude depuis plus d'un demi siècle et qui a fourni diverses possibilités variables, ce qui met en évidence le fait que la solution idéale n'a pas encore été trouvée. Parmi les différentes solutions qui nous sont connues, toutes, sans exception, présentent plus ou moins la difficulté de l'assemblage des différents tronçons qui la constituent, ainsi que le problème pour obtenir une tuyauterie coudée puisque le coude de celle-ci, vue la fragilité relative du matériel qui la constitue, dans le cas où l'arrivée d'eau viendrait à manquer puis reviendrait à nouveau, généralement de façon imprévisible, pourrait se briser si la pression est très forte, fait plus que probable.

La chimie du carbone a provoqué une révolution industrielle dans tous les sens du terme, permettant de fabriquer de multiples objets en plastique, comme on l'appelle communément, bien que sous cette dénomination existent d'autres genres de matériaux selon leur composition spécifique.

Les plastiques durs ont permis la fabrication d'objets d'une grande résistance, permettant ainsi la fabrication de tuyaux de divers diamètres ou calibres, très aptes pour la conduite de liquides et même de matières gazéifiées, ces dernières étant très consommées dans l'actualité.

Les caractéristiques de ces tuyauteries, du fait d'être fabriquées en différentes épaisseurs, permettent de les appliquer aussi bien à des conduites de grand débit comme à d'autres de moindre débit. Elles permettent aussi la construction de celles-ci selon les longueurs adéquates pour un transport et une manipulation plus aisés.

Un problème qui subiste néanmoins en relation avec ces tuyauteries en plastique dur, se réfère au raccordement ou assemblage des différents tronçons qui doit se faire de façon à obtenir l'herméticité appropiée de toute la conduite. Il est également convenable que la conduite permette une certaine flexibilité, car si la conduite réalisée est trop rigide, des dommages peuvent se produire.

La présente invention es destinée à résoudré ces problèmes de façon simple, avec une manipulation commode pour ceux qui réalisent l'installation et aussi le problème des déviations ou dérivations du débit en une direction autre que la ligne droite, de façon simple, profitant de la nature même des tuyaux et les possibilités que cela entraîne, alliées au propre débit du fluide qu'elles conduisent et qui permet d'obtenir les déviations adéquates au moyen de la fabrication de petits tronçons specialement conçus en ce but et qui, pour les raisons expliquées dans la description faite plus loin, jouissent d'une grande herméticité, facilité de manipulation et résistance, aussi bien au moment de la conduite normale que pour le cas supposé d'une brusque interruption de l'arrivée du fluide suivie d'un retour tout aussi brusque.

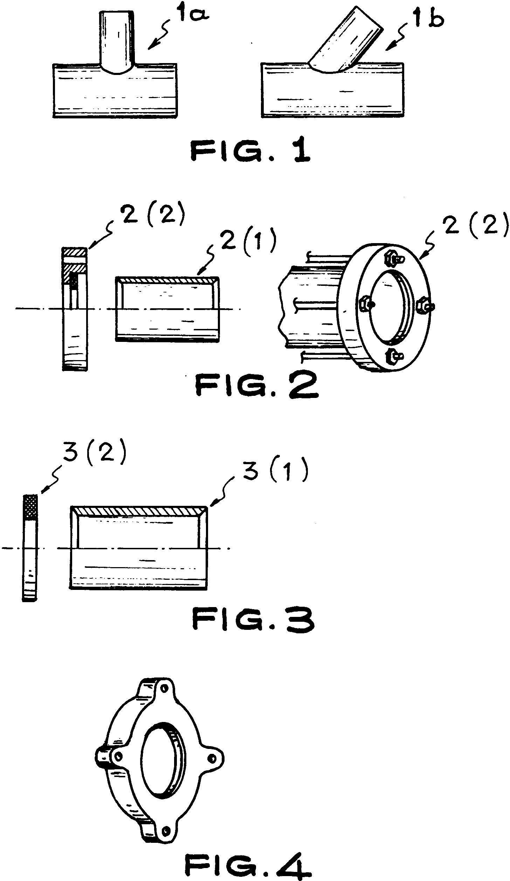

La présente invention, trés simple, prétend faire obstacle comme il est dit, à de tels problèmes. Pour cela, et étant donné les caractéristiques du plastique, une tuyauterie dure est déterminée ou construite et qui au moment d'être fabriquée, comme nous pouvons l'apprécier sur le plan joint à cette description (Fig. 1) est fabriquée par des moyens connus et non revendiqués, unie à un appendice perpendiculaire, 1(a),ou oblique, 1(b), qui permet un assemblage à d'autres tuyaux diagonaux ou obliques selon les nécessités de la conduite.

La propre expansion du fluide, liquide ou gazéifié, détermine la déviation de celui-ci, une fois les tuyauteries pleines, dans la direction souhaitée. Il est évident que la déviation de façon oblique peut s'accoupler, fig. 1(a), avec le déplacement circulaire du tuyau dans la direction nécessaire.

Ceci, bien que ne faisant pas partie de l'invention à cet instant préconisée, est nécessaire à la sustentation ou au fonctionnement correct de l'essentiel de l'invention.

Cette invention consiste essentiellement en un nouveau tube pour l'union de tuyauteries construites en plastique (sic) dur et dans les calibres habituels utilisés pour les installations dans ce genre de conduites. Le tube d'union, comme nous pouvons l'apprécier dans la figure 2, possède un calibre légèrement supérieur à celui du tube dont il doit joindre les segments, à voir dans la figure 2(1).

Ce tube qui constitue le joint, présente à ses extrémités 2(2) une sorte de couronne dond le calibre est légèrement supérieur à ce dernier tandis que le calibre de la partie interne du tube d'union possède une mesure qui lui permet de s'unir aux tuyaux ou extrémités des tuyaux à assembler, pouvant glisser doucement sur ceux-ci pour faciliter le montage.

Le tube qui constitue le joint en question présente à chacune de ses extremités un rebord, fig. 3(1) auquel peut s'assembler une rondelle flexible qui permet une fermeture parfaite entre la bride, fig. 2(2) et 3(2), aux extrémités du tuyau.

Ce rebord ou biseau adopte la forme adéquate pour le parfait assemblage de la rondelle.

La bride mentionnée admet deux variantes représentées dans les figures 3(2) et 4. La première est un simple grossisement du bord extérieur de la bride dans laquelle se logent les quatres orifices en face les uns des autres de façon à former une croix comme nous pouvons l'apprécier après examen dans la fig. 2(2). Cela suppose un coût plus élevé et un emploi accru de matériel, puisque la bride peut être fabriquée selon la forme représentée dans la fig. 4 en la dotant de saillies face à face en forme de croix, ce qui ne détermine pas une moindre résistance de la bride.

Les orifices de la bride de l'une ou l'autre possibilité qui est exposée, sont destinés au passage des vis adéquates qui reçoivent des écrous à chaque extremité qui permettent l'assemblage parfait de la bride à l'ensemble du tube d'union, obtenant ainsi une union étanche et flexible à la fois, des tuyaux à assembler.

La flexibilité de l'union est de grande importance car même si l'assemblage obtenu offre une grande résistance aux coups, supérieure aux seize atmosphères, elle est déterminante pour un meilleur assemblage des tuyauteries ainsi unies face aux possibles mouvements, aussi légers soient-ils, du terrain où est installée la conduite, évitant ainsi de possibles cassures.

## Revendications

**PREMIERE.-** PERFECTIONNEMENTS DES TUBES D'UNION-DILATATION DE TUYAUTERIES caractérisés par l'utilisation d'une valve combinée avec des tubes fabriqués en plastique dur, et qui est essentiellement composée par un tube de moindre grandeur qui s'assemble aux extrémités des tuyaux à unir, nécessaire pour obtenir le raccord avec à la fois une relative ampleur qui permet une installation facile. Le tube présente à ses extrémités un biseau ou alternativement un rebord en forme d'échelon situé vers la partie interne pour permettre l'adhésion, entre le rebord et deux brides,installées chacune à une extrémité, d'un joint en matériel flexible qui détermine l'étanchéité de l'union et la flexibilité relative de la conduite réalisée, lorsque les brides sont serrées au moyen des quatre vis incorporées dans les orifices correspondants.

**SECONDE.-** PERFECTIONNEMENTS DES TUBES D'UNION-DILATATION DE TUYAUTERIES selon la précédente revendication, caractérisés par la situation des orifices de la bride, destinés au passage des vis. Ils sont réalisés dans le propre corps de la couronne circulaire qui la conforme, en ayant alors une aire égale sur toute la couronne ou alternativement la couronne est dotée de quatre saillies avec les trous de foret correspondants au moment de sa fabrication pour permettre le passages des vis; ces sailles face à face sont situées aux extrémités des deux diamètres perpendiculaires entre eux.

**TROISIEME.-** PERFECTIONNEMENTS DES TUBES D'UNION-DILATATION DE TUYAUTERIES selon les revendications précedentes, caractérisés par le fait que le serrage et ajustement des vis se réalisent par des moyens conventionnels.
